# FASCICULE DE BREVET EUROPEEN

(11) **EP 3 747 721 B1**
(45) Date de publication et mention de la délivrance du brevet: **15.03.2023**
(21) Numéro de dépôt: 20177293.6
(22) Date de dépôt: 29.05.2020
(51) Int. Cl.: B61B 13/04, B61K 9/12, B60B 17/00, B60B 17/02

(54) **DISPOSITIF DE SURVEILLANCE DE L'USURE D'UN FLASQUE DE GALET**
ÜBERWACHUNGSVORRICHTUNG DES VERSCHLEISSES EINES LAUFROLLENFLANSCHES
DEVICE FOR MONITORING THE WEAR OF A ROLLER FLANGE

(30) Priorité: 05.06.2019 FR 1905964
(43) Date de publication de la demande: 09.12.2020
(73) Titulaire: Newtl (Société par Actions Simplifiée à Associé Unique), 67980 Hangenbieten (FR)
(72) Inventeur: GEIGER, Paul, 67120 Dachstein (FR)
(74) Mandataire: Cabinet Nuss

(56) Documents cités:
- EP-A1- 2 771 219
- DE-A1- 19 913 127
- FR-A1- 3 060 457
- US-A1- 2003 072 001

## Description

La présente invention se rapporte à un flasque de galet coopérant avec une surface de rail, ce flasque de galet comprenant un dispositif de surveillance de l'usure du flasque.

Lors du déplacement d'un véhicule roulant le long d'un axe ferroviaire, notamment dans le cadre des tramways, un mécanisme de fonctionnement existant consiste à positionner des galets de part et d'autre d'un rail de guidage. Ces galets sont montés rotatifs autour d'un axe qui présente une inclinaison, généralement de l'ordre de 45° par rapport à la verticale, de sorte que, d'une part, un bandage de chacun des galets appuie sur chaque bord latéral de la surface supérieure du champignon du rail de guidage et que, d'autre part, la face supérieure de la portion périphérique la plus basse des galets soit positionnée sous la portion inférieure du champignon du rail. Cet arrangement particulier des galets par rapport au rail permet ainsi un entrainement guidé du véhicule sous l'effet de la rotation des bandages des galets tout en bloquant le rail entre les galets par la position particulière du champignon du rail entre les bandages au-dessus et les flasques en-dessous de chacun des galets. Le positionnement des faces supérieures des flasques des galets sous le champignon du rail évite ainsi au rail de s'extraire de sa position entre les deux galets, par exemple lorsque le véhicule s'écarte vers le haut, et empêche en conséquence le risque d'un déguidage du véhicule. Un tel véhicule est décrit dans la publication EP 2771219 A1.

Cependant, le contact du flasque d'un galet avec le champignon du rail de guidage lorsque le galet est déplacé en hauteur, par exemple sous l'effet d'un encombrement sur lequel roulerait le véhicule, conduit un frottement qui, répété, entraine une usure naturelle de la portion périphérique des flasques des galets. Lorsque l'usure du flasque atteint un certain seuil et devient trop importante, le bord des flasques des galets positionnés sous le rail ne sont alors plus en mesure de retenir le véhicule en position par rapport au rail et donc d'éviter une perte de guidage du véhicule.

Pour éviter un tel phénomène, il est alors indispensable de surveiller l'usure des flasques des galets. Pour ce faire, il est courant d'utiliser un outil ou un appareil de mesure destiné à être positionné sur le flasque pour en mesurer les dimensions ou en contrôler la forme. Cette opération de surveillance de forme d'une pièce en raison de son usure existe dans de nombreux domaines, même éloignés de celui des flasques de galet comme dans le cadre de celui des roues de véhicules ferroviaires proposé par la publication DE 19913127.Cependant, ce contrôle par l'intermédiaire d'un outil nécessite pour l'intervenant de s'approcher du flasque du galet vérifié, voire même de le manipuler. Les galets étant positionnés sous le véhicule, une telle opération de contrôle impose alors que la zone de rapprochement des galets soit parfaitement accessible pour l'intervenant en charge de la surveillance de l'usure des flasques de sorte que le véhicule soit dégagé du rail ou positionné au niveau d'une fosse de maintenance de véhicule.

La présente invention a pour but de pallier ces inconvénients en proposant un flasque de galet comprenant un dispositif de surveillance de l'usure du flasque, ce dispositif de surveillance autorisant une opération de contrôle rapide sans imposer une contrainte d'environnement de travail particulière.

L'invention a ainsi pour objet un flasque de galet comprenant un dispositif de surveillance de l'usure du flasque comportant un mentonnet périphérique, le flasque de galet étant destiné à coopérer avec un flasque de galet homologue positionné en vis-à-vis pour interagir avec le champignon d'un rail de roulement, caractérisé en ce que le dispositif comprend au moins un premier évidement localisé au niveau d'une ligne périphérique à rayon constant du flasque configuré pour à être positionné au niveau où le point d'écartement du flasque par rapport à son homologue est le plus restreint, le galet du flasque étant monté sur un axe de rotation incliné par rapport à la verticale, la ligne périphérique à rayon constant du flasque est positionnée au niveau d'un point de la surface supérieure du mentonnet dont la tangente est orientée selon un axe sensiblement vertical.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

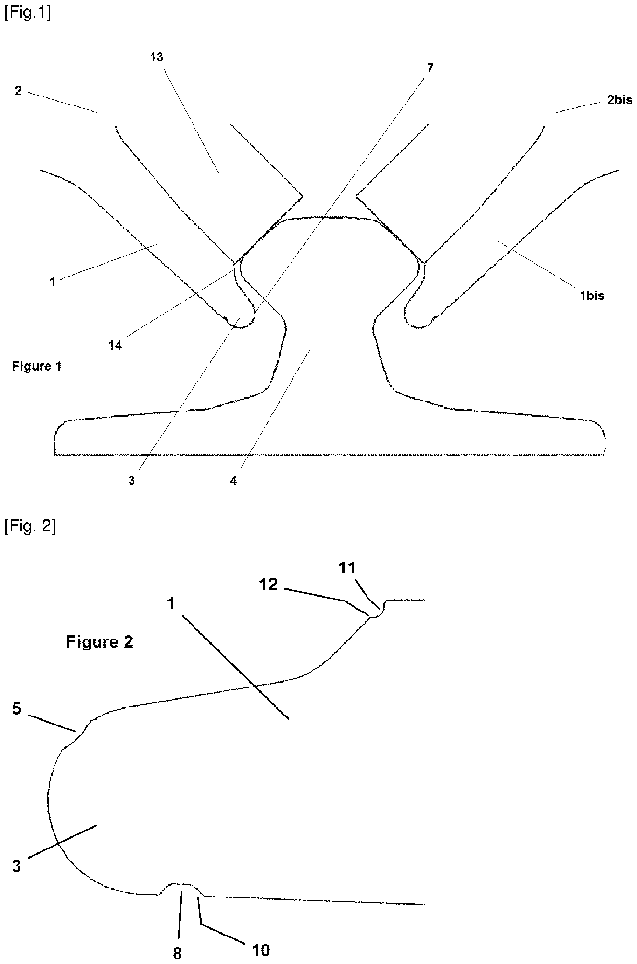

[Fig.1] est une représentation schématique d'un exemple d'arrangement de flasques intégrant le dispositif de l'invention par rapport à un rail de guidage.
[Fig.2] est une représentation schématique en section d'un exemple d'arrangement positionnant plusieurs évidements sur un flasque participant à la réalisation d'un dispositif de surveillance d'usure selon l'invention.

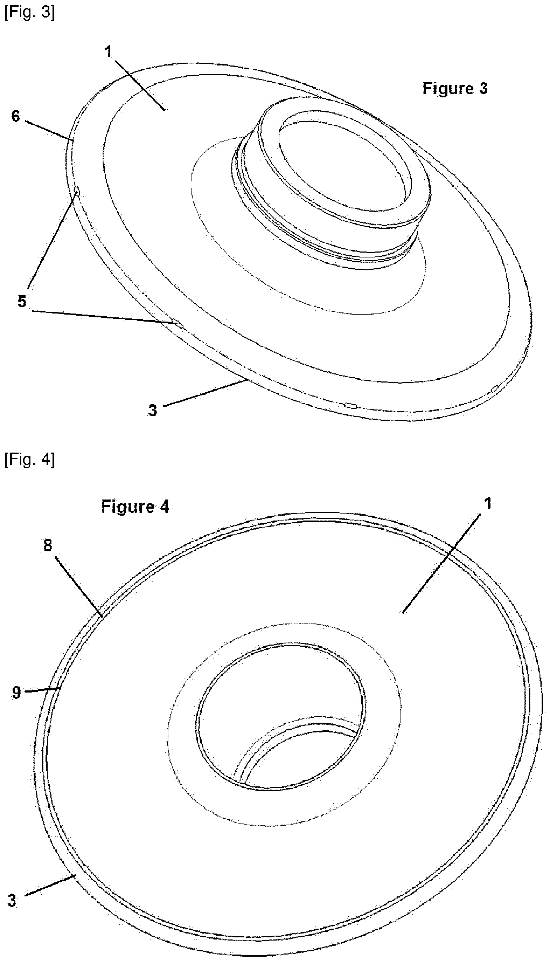

[Fig.3] est une représentation schématique de la vue supérieure d'un exemple de construction d'un flasque intégrant le dispositif de surveillance d'usure selon l'invention.
[Fig.4] est une représentation schématique de la vue inférieure d'un exemple de construction intégrant le dispositif de surveillance d'usure selon l'invention.

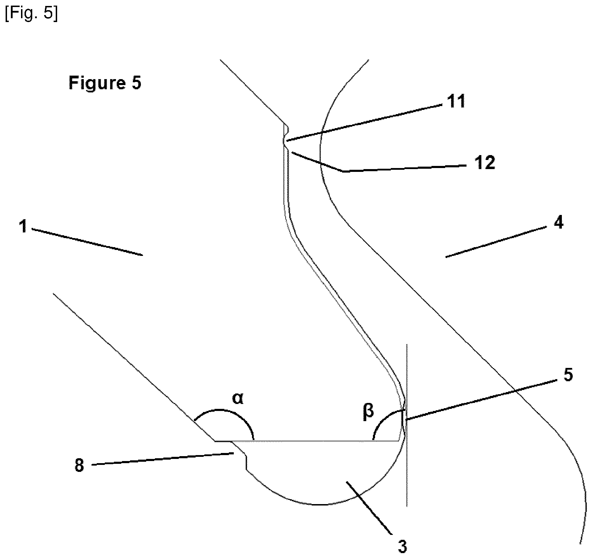

[Fig.5] est une représentation schématique en section d'un exemple d'arrangement positionnant plusieurs évidements et détaillant certaines particularités techniques de cet arrangement.

Dans le présent document, du fait de l'inclinaison du flasque 1 ou du galet 2, les qualifications de surfaces supérieures ou inférieures du flasque 1 ou du galet 2 renvoient aux directions vers lesquels les surfaces sont orientées. Ainsi, une surface inférieure du flasque 1 est dirigée vers le sol tandis qu'une surface supérieure du flasque 1 est dirigée vers le champignon du rail 4. Le mentonnet 3 du flasque 1 qui réalise une jonction périphérique entre les faces supérieure et inférieure du flasque 1 présente classiquement une surface arrondie, de sorte que, en raison de l'inclinaison du flasque 1 du galet 2, la surface de la portion supérieure du mentonnet 3 est conduite à être orientée vers le champignon tandis que la surface de la portion inférieure du mentonnet 3 est amenée à être dirigée vers le sol.

L'invention porte sur un flasque 1 de galet 2 comprenant un dispositif de surveillance de l'usure du flasque 1 comportant un mentonnet 3 périphérique, le flasque 1 de galet 2 étant destiné à coopérer avec un flasque 1bis de galet 2bis homologue positionné en vis-à-vis pour interagir avec le champignon d'un rail 4 de roulement, caractérisé en ce que le dispositif comprend au moins un premier évidement 5 localisé au niveau d'une ligne périphérique 6 à rayon constant du flasque 1 configuré pour être positionné au niveau où le point 7 d'écartement du flasque 1 par rapport à son homologue 1bis est le plus restreint. Un tel évidement 5 au niveau de la surface du flasque 1 réalise un marquage qui n'altère pas le fonctionnement du flasque 1 tout en permettant une évaluation visuelle de l'usure. En effet, une usure de la matière au niveau de la surface du flasque 1 qui entoure l'évidement 5 entraine la disparition de cet évidement 5. Selon l'invention, en raison de l'inclinaison de l'axe de rotation du galet 2, la ligne périphérique 6 à rayon constant du flasque 1 au niveau de laquelle l'évidement 5 est positionné pour être au plus près de son homologue, est disposée sur la face supérieure du flasque 1 galet 2 destinée à faire face au rail 4 de roulement. De façon plus particulière, cette ligne périphérique 6 est ainsi positionnée au niveau d'une portion supérieure du mentonnet 3 du flasque 1. La position de l'évidement 5 sur le bord du flasque 1 là où le point 7 d'écartement du flasque 1 par rapport à son homologue 1bis est le plus restreint apporte un marquage d'évaluation de la quantité de matière du flasque 1 positionnée sous la face inférieure du champignon du rail 4 et donc de la capacité du flasque 1 à s'opposer à une extraction du rail 4. L'évidement 5 au point 7 d'écartement en périphérie du flasque 1 réalise ainsi un élément de contrôle de la sécurisation du guidage par les galets 2, 2bis.

Selon une particularité de construction de la ligne périphérique 6 qui positionne ce premier évidement 5, celle-ci est positionnée au niveau d'un point de la surface supérieure du mentonnet 3 dont la tangente est orientée selon un axe sensiblement vertical lorsque le galet 2 est monté sur un axe de rotation incliné par rapport à la verticale.

Selon une particularité de construction complémentaire de l'invention, le dispositif de surveillance de l'usure du flasque 1 comprend également au moins un second évidement 8 positionné au niveau d'une ligne périphérique 9 à rayon constant et localisé sur la surface du flasque 1 opposée à la surface destinée à faire face au rail 4 de roulement. Cette surface du flasque 1 opposée à la surface du flasque 1 en vis-à-vis du rail 4 correspond à la surface inférieure du flasque 1 et est disposée selon un plan sensiblement perpendiculaire à l'axe de rotation du galet 2. L'évidement 8 positionné sur la surface inférieure du flasque 1 réalise un marquage qui permet une quantification de l'usure du bord périphérique du flasque 1 et notamment de la partie inférieure du mentonnet 3. En étant orientée vers le sol, cette partie inférieure du mentonnet 3 est conduite à rencontrer des éléments disposés de part et d'autre du rail 4 notamment au niveau de ses patins. Ces éléments d'encombrement ou de saleté, récurrent dans un environnement urbain, sont susceptibles d'opérer un frottement contre la surface du mentonnet 3 entrainant son usure. Toutefois, à l'inverse de l'usure de la face supérieure du mentonnet 3, l'usure de la face inférieure du flasque présente un impact moindre sur la sécurité du véhicule. Aussi, la tolérance de l'usure au niveau de la face inférieure du flasque 1 est plus importante qu'au niveau de sa face supérieure. La surveillance de l'usure de la face inférieure du flasque 1 au niveau de l'évidement 8 permet, en vérifiant l'état de la partie inférieure du mentonnet 3, de surveiller la capacité mécanique du flasque 1 à être retenu sur le rail 4 par l'intermédiaire de cette partie du mentonnet 3. Le volume de matière occupé par la partie inférieure du mentonnet 3 participe à renforcer la rigidité du bord périphérique du flasque 1 lors de contact contre la face inférieure du champignon du rail 4 lors de soulèvement. De même, ce volume de matière apporte une inertie au flasque 1 en cas de soulèvement.

Le rayon de la ligne périphérique 6 au niveau de laquelle est positionné le premier évidement 5 situé au niveau de la face supérieure du flasque 1 est réalisé de façon à être plus important que le rayon de la ligne périphérique 9 au niveau de laquelle est positionné le second évidement 8 au niveau de la face inférieure du flasque 1. Cette différence de rayon des lignes périphériques 6, 9 permet, en raison de l'inclinaison de l'axe de rotation du flasque 1, un positionnement des lignes périphériques 6, 9 situées à proximité du rail 4, à des hauteurs sensiblement identiques par rapport au sol ou au patin du rail 4.

Selon une spécificité de cette particularité de construction, le second évidement 8 comprend un bord intérieur 10 avec une pente positionnée dans un plan qui réalise un angle α avec la surface du flasque 1 qui porte ce second évidement 8, de sorte que, d'une part, le bord latéral du mentonnet 3 du flasque 1 et, d'autre part, le premier évidement 5 soient positionnés de part et d'autre du plan de la pente du bord intérieur 10. Le bord intérieur 10 du second évidement 8 correspond au bord de l'évidement 8 positionné axialement, c'est-à-dire positionné du côté de l'axe de pivotement du galet 2. Selon une construction préférée de cette spécificité, l'angle α de la pente du bord intérieur 10 avec la surface du flasque 1 qui porte le second évidement 8 comprend une valeur comprise entre 40° et 50°. L'angle d'inclinaison de l'axe de rotation du galet 2 par rapport à la verticale étant de l'ordre de 45°, la pente du bord intérieur 10 du second évidement 8 est alors disposée dans un plan sensiblement horizontal ou sensiblement parallèle au plan de la surface du sol sur lequel repose le rail. La dégradation du flasque 1 par frottement de son mentonnet 3 contre des éléments disposés sur le sol conduit à une usure progressive selon un plan sensiblement parallèle au plan de la surface du sol. Aussi, le bord intérieur 10 du second évidement 8 disposé selon une pente sensiblement parallèle au plan de la surface du sol permet la réalisation d'un marquage de l'évaluation de l'amplitude de l'usure du mentonnet 3 selon un plan particulier, de sorte que le marquage formé par le second évidement 8 au niveau de la surface inférieure du flasque 1 permet également, depuis la face inférieure du flasque 1, d'évaluer l'importance de l'usure de la portion supérieure du mentonnet 3 par rapport à la position du premier évidement 5 disposée sur la surface supérieure du flasque 1. Selon une construction préférée, le plan de la pente du bord intérieur 10 du second évidement 8 est positionné à au moins 2 millimètres du bord latéral du premier évidement 5 de la surface supérieure du flasque 1. Aussi, il est possible pour un intervenant, grâce à cet arrangement du plan de la pente du second évidement 8, d'évaluer, depuis la surface inférieure du flasque 1, si l'usure de la portion latérale du mentonnet 3 impacte la surface supérieure du flasque 1 et donc, en conséquence, le risque d'extraction du rail 4 de sa position entre les galets 2.

Selon une autre spécificité complémentaire de la particularité de construction énoncée précédemment, la tangente au niveau du point de positionnement du premier évidement 5 réalise un angle β avec le plan du bord intérieur 10 du second évidement 8 dont la valeur est comprise entre 85° et 95°. Un tel arrangement de construction apparaît notamment lorsque, le galet 2 étant monté sur un axe de rotation incliné par rapport à la verticale, la ligne périphérique 6 qui positionne le premier évidement 5 se trouve positionnée au niveau d'un point de la surface supérieure du mentonnet 3 dont la tangente est orientée selon un axe sensiblement vertical.

Selon une autre particularité de construction complémentaire de l'invention, le dispositif comprend un évidement 11 supplémentaire localisé au niveau d'une ligne 12 à rayon constant périphérique au col du flasque 1 et positionné au niveau d'un point 14 de la surface supérieure du flasque 1 où l'écartement du flasque 1 par rapport à son homologue 1bis est le plus important. De façon préférée, cette disposition de la ligne 12 périphérique sur le col du flasque 1 correspond au point de la surface supérieure du flasque 1 positionnée en vis-à-vis du bord latéral du champignon du rail 4. Ce point de la surface supérieure du flasque 1 est notamment positionné à proximité du bandage 13 du galet 2 et permet une évaluation de l'usure du flasque 1 suite aux déplacements latéraux du véhicule par rapport au rail de guidage, de sorte que les flasques 1 impactent successivement le champignon du rail 4 de part et d'autre de celui-ci. Lorsque la surface supérieure du flasque 1 comprend un revêtement et/ou un traitement améliorant la dureté et/ou la résistance à l'usure, l'évidement 11 supplémentaire est positionné au niveau du bord de ce revêtement et/ou traitement de surface le plus proche de l'axe de pivotement du flasque 1. De même, le premier évidement 5 est positionné au niveau du bord de ce revêtement et/ou traitement de surface le plus éloigné de l'axe de pivotement du flasque 1. Aussi, en absence d'apparition d'aspérités sur la surface supérieure du flasque 1 après utilisation, l'usure d'un revêtement et/ou de la surface traitée est alors aisément évaluable en fonction de l'effacement des évidements 5, 11 stratégiquement positionnés au niveau des deux bords de la surface supérieure traitée ou renforcée du flasque 1.

Selon une spécificité préférée de construction de cette particularité, la ligne périphérique 12 qui positionne cet évidement 11 supplémentaire sur le flasque 1 du galet 2 se trouve placée au niveau d'un point de la surface supérieure du flasque 1 dont la tangente est orientée selon un axe sensiblement vertical lorsque le galet 2 est monté sur un axe de rotation incliné par rapport à la verticale.

Selon une autre spécificité complémentaire de cette particularité de construction, l'évidement 11 supplémentaire comprend un bord extérieur 12 dont la pente est positionnée dans un plan qui réalise un angle avec le plan de la pente du bord intérieur 10 du second évidement 8, l'angle comprenant une valeur comprise entre 40° et 50°. Le bord extérieur 12 de l'évidement 11 supplémentaire correspond au bord de l'évidement 11 positionné radialement, c'est-à-dire positionné du côté du mentonnet 3 du galet 2.

Il convient de relever que, du fait du pivotement du galet 2 notamment autour d'un axe de rotation qui présente un angle d'inclinaison par rapport à la verticale, l'évaluation de l'usure du flasque 1 est susceptible d'être réalisée par l'intervenant depuis un point de vue qui ne nécessite pas l'accès à la zone de positionnement du rail 4 entre les flasques 1, 1bis. Aussi, depuis un point de vue qui ne lui permet pas d'accéder à la zone de positionnement du rail 4 entre les flasques 1, 1bis, un intervenant est en mesure de faire pivoter le galet 2 pour contrôler un ou plusieurs des évidements 5, 8, 11 de surveillance de l'usure du flasque 1.

Selon une autre particularité complémentaire de construction, au moins un évidement 5, 8, 11 est réalisé sous la forme d'une rainure circulaire disposée le long d'une ligne périphérique à rayon constant 6, 9, 12.

Selon une alternative à la particularité précédente de construction, au moins un évidement 5, 8, 11 est réalisé par au moins une absence ponctuelle de matière localisée sur une ligne périphérique à rayon constant 6, 9, 12.

Selon une autre particularité complémentaire de construction, la surface du flasque 1 comprenant un revêtement et/ou un traitement améliorant la dureté et/ou la résistance à l'usure, au moins un évidement 5, 8, 11 est réalisée de façon à présenter une profondeur inférieure à l'épaisseur du traitement de surface qui recouvre la portion surveillée de la surface du flasque 1. Selon un exemple de construction, cette profondeur d'évidement 5, 8, 11 est d'au plus 0,6 millimètre, préférentiellement d'au plus 0,5 millimètre.

Bien entendu, l'invention n'est pas limitée aux modes de réalisation décrits et représentés aux dessins annexés. Des modifications restent possibles, notamment du point de vue de la constitution des divers éléments, sans sortir pour autant du domaine de protection de l'invention tel que défini par les revendications.

## Revendications

1. Flasque (1) de galet (2) comprenant un dispositif de surveillance de l'usure du flasque (1) comportant un mentonnet (3) périphérique, le flasque (1) de galet (2) étant destiné à coopérer avec un flasque (1bis) de galet (2bis) homologue positionné en vis-à-vis pour interagir avec le champignon d'un rail (4) de roulement, **caractérisé en ce que** le dispositif comprend au moins un premier évidement (5) localisé au niveau d'une ligne périphérique (6) à rayon constant du flasque (1) configuré pour être positionné au niveau où le point (7) d'écartement du flasque (1) par rapport à son homologue (1bis) est le plus restreint, le galet (2) étant monté sur un axe de rotation incliné par rapport à la verticale, la ligne périphérique (6) à rayon constant du flasque (1) étant dans ce cas-là positionnée au niveau d'un point de la surface supérieure du mentonnet (3) dont la tangente est orientée selon un axe sensiblement vertical.

2. Flasque (1) de galet (2) selon la revendication 1, **caractérisé en ce que** le dispositif de surveillance de l'usure du flasque (1) comprend également au moins un second évidement (8) positionné au niveau d'une ligne périphérique (9) à rayon constant et localisé sur la surface du flasque (1) opposée à la surface destinée à faire face au rail (4) de roulement.

3. Flasque (1) de galet (2) selon la revendication 2, **caractérisé en ce que** le second évidement (8) comprend un bord intérieur (10) avec une pente positionnée dans un plan qui réalise un angle (α) avec la surface du flasque (1) qui porte ce second évidement (8), de sorte que, d'une part, le bord latéral du mentonnet (3) du flasque (1) et, d'autre part, le premier évidement (5) soient positionnés de part et d'autre du plan de la pente du bord intérieur (10).

4. Flasque (1) de galet (2) selon la revendication 3, **caractérisé en ce que** l'angle (α) de la pente du bord intérieur (10) avec la surface du flasque qui porte le second évidement comprend une valeur comprise entre 40° et 50°.

5. Flasque (1) de galet (2) selon la revendication 1 en combinaison avec une des revendications 4 et 5, **caractérisé en ce que** la tangente au niveau du point de positionnement du premier évidement (5) réalise un angle (β) avec le plan du bord intérieur (10) du second évidement (8) dont la valeur est comprise entre 85° et 95°.

6. Flasque (1) de galet (2) selon une des revendications précédentes, **caractérisé en ce que** le dispositif comprend un évidement (11) supplémentaire localisé au niveau d'une ligne (12) à rayon constant périphérique au col du flasque (1) et positionné au niveau d'un point (14) de la surface supérieure du flasque 1 où l'écartement du flasque (1) par rapport à son homologue (1bis) est le plus important.

7. Flasque (1) de galet (2) selon une des revendications 1 à 6, **caractérisé en ce qu'**au moins un évidement (5, 8, 11) est réalisé sous la forme d'une rainure circulaire disposée le long d'une ligne périphérique à rayon constant (6, 9, 12).

8. Flasque (1) de galet (2) selon une des revendications 1 à 6, **caractérisé en ce qu'**au moins un évidement (5, 8, 11) est réalisé par au moins une absence ponctuelle de matière localisée sur une ligne périphérique à rayon constant (6, 9, 12).

9. Flasque (1) de galet (2) selon une des revendications précédentes, **caractérisé en ce que**, la surface du flasque (1) comprenant un revêtement et/ou un traitement améliorant la dureté et/ou la résistance à l'usure, au moins un évidement (5, 8, 11) est réalisée de façon à présenter une profondeur inférieure à l'épaisseur du traitement de surface qui recouvre la portion surveillée de la surface du flasque (1). 1

## Patentansprüche

1. Flansch (1) einer Laufrolle (2), beinhaltend eine Vorrichtung zur Überwachung des Verschleißes des Flansches (1), der eine umlaufende Nase (3) umfasst, wobei der Flansch (1) der Laufrolle (2) dazu bestimmt ist, mit einem gegenüber angeordneten homologen Flansch (1b) einer Laufrolle (2b) zusammenzuwirken, um mit dem Kopf einer Laufschiene (4) zu interagieren, **dadurch gekennzeichnet, dass** die Vorrichtung mindestens eine erste Aussparung (5) beinhaltet, die im Bereich einer Umfangslinie (6) mit konstanten Radius des Flansches (1) angeordnet ist und dazu konfiguriert ist, an dem Punkt (7) positioniert zu sein, an dem der Abstand der Flansches (1) zu seinem Gegenstück (1b) am kleinsten ist, wobei die Laufrolle (2) auf einer mit Bezug auf die Vertikale geneigten Drehachse montiert ist, wobei die Umfangslinie (6) mit konstantem Radius des Flansches (1) in diesem Fall im Bereich eines Punkts der oberen Oberfläche der Nase (3) positioniert ist, dessen Tangente gemäß einer im Wesentlichen vertikalen Achse ausgerichtet ist.

2. Flansch (1) einer Laufrolle (2) nach Anspruch 1, **dadurch gekennzeichnet, dass** die Vorrichtung zur Überwachung des Verschleißes des Flansches (1) ferner mindestens eine zweite Aussparung (8) beinhaltet, die im Bereich einer Umfangslinie (9) mit konstantem Radius positioniert ist und auf derjenigen Oberfläche des Flansches (1) angeordnet ist, die zu der Oberfläche entgegengesetzt ist, die dazu bestimmt ist, der Laufschiene (4) gegenüberzuliegen.

3. Flansch (1) einer Laufrolle (2) nach Anspruch 2, **dadurch gekennzeichnet, dass** die zweite Aussparung (8) eine Innenkante (10) mit einer Neigung beinhaltet, die in einer Ebene liegt, die mit der Oberfläche des Flansches (1), die diese zweite Aussparung (8) trägt, einen Winkel (α) bildet, sodass die Seitenkante der Nase (3) des Flansches (1) einerseits und die erste Aussparung (5) andererseits zu beiden Seiten der Ebene der Neigung der Innenkante (10) positioniert sind.

4. Flansch (1) einer Laufrolle (2) nach Anspruch 3, **dadurch gekennzeichnet, dass** der Winkel (α) der Neigung der Innenkante (10) mit der Oberfläche des Flansches, die die zweite Aussparung trägt, einen Wert zwischen 40° und 50° beinhaltet.

5. Flansch (1) einer Laufrolle (2) nach Anspruch 1 in Kombinaten mit einem der Ansprüche 4 und 5, **dadurch gekennzeichnet, dass** die Tangente im Bereich des Punkts der Positionierung der ersten Aussparung (5) mit der Ebene der Innenkante (10) der zweiten Aussparung (8) einen Winkel (β) bildet, dessen Wert zwischen 85° und 95° beträgt.

6. Flansch (1) einer Laufrolle (2) nach einem der vorhergehenden Ansprüche, **dadurch gekennzeichnet, dass** die Vorrichtung eine zusätzliche Aussparung (11) beinhaltet, die im Bereich einer Umfangslinie (12) mit konstanten Radius am Hals des Flansches (1) angeordnet ist und im Bereich eines Punkts (14) der oberen Oberfläche des Flansches 1 positioniert ist, an dem der Abstand des Flansches (1) zu seinem Gegenstück (1b) am größten ist.

7. Flansch (1) einer Laufrolle (2) nach einem der Ansprüche 1 bis 6, **dadurch gekennzeichnet, dass** mindestens eine Aussparung (5, 8, 11) in Form einer kreisförmigen Nut realisiert ist, die entlang einer Umfangslinie mit konstantem Radius (6, 9, 12) eingerichtet ist.

8. Flansch (1) einer Laufrolle (2) nach einem der Ansprüche 1 bis 6, **dadurch gekennzeichnet, dass** mindestens eine Aussparung (5, 8, 11) durch mindestens ein punktuelles Fehlen von Material an einer Umfangslinie mit konstantem Radius (6, 9, 12) realisiert ist.

9. Flansch (1) einer Laufrolle (2) nach einem der vorhergehenden Ansprüche, **dadurch gekennzeichnet, dass** die Oberfläche des Flansches (1) eine Beschichtung und/oder eine Behandlung beinhaltet, die die Härte und/oder die Verschleißfestigkeit verbessert, wobei mindestens eine Aussparung (5, 8, 11) so eingerichtet ist, dass sie eine kleinere Tiefe als die Dicke der Oberflächenbehandlung, die den überwachten Abschnitt der Oberfläche des Flansches (1) abdeckt, aufweist.

## Claims

1. Roller (2) end plate (1) comprising a device for monitoring the wear of the end plate (1) having a peripheral flange (3), the roller (2) end plate (1) being intended to cooperate with a homologous roller (2bis) end plate (Ibis) positioned facing it so as to interact with the head of a rolling rail (4), **characterized in that** the device comprises at least one first recess (5) localized at the level of a peripheral line (6) of constant radius on the end plate (1) and configured to be positioned at the level at which the point (7) of separation of the end plate (1) relative to its homologue (Ibis) is the smallest, the roller (2) being mounted on a rotation axle that is inclined relative to the vertical, the peripheral line (6) of constant radius on the end plate (1) being in this case positioned at the level of a point on the upper surface of the flange (3) the tangent to which is oriented along a substantially vertical axis.

2. Roller (2) end plate (1) according to Claim 1, **characterized in that** the device for monitoring the wear of the end plate (1) also comprises at least one second recess (8) positioned at the level of a peripheral line (9) of constant radius and localized on the surface of the end plate (1) that is opposite the surface intended to face the rolling rail (4).

3. Roller (2) end plate (1) according to Claim 2, **characterized in that** the second recess (8) comprises an inner edge (10) with a slope positioned in a plane that makes an angle (α) with the surface of the end plate (1) that bears this second recess (8), such that, on the one hand, the lateral edge of the flange (3) of the end plate (1) and, on the other hand, the first recess (5) are positioned on either side of the plane of the slope of the inner edge (10).

4. Roller (2) end plate (1) according to Claim 3, **characterized in that** the angle (α) of the slope of the inner edge (10) with the surface of the end plate that bears the second recess has a value of between 40° and 50°.

5. Roller (2) end plate (1) according to Claim 1 in combination with one of Claims 4 and 5, **characterized in that** the tangent at the level of the point at which the first recess (5) is positioned makes an angle (β) with the plane of the inner edge (10) of the second recess (8) the value of which is between 85° and 95°.

6. Roller (2) end plate (1) according to one of the preceding claims, **characterized in that** the device comprises an additional recess (11) localized at the level of a line (12) of constant radius peripheral to the neck of the end plate (1) and positioned at the level of a point (14) on the upper surface of the end plate (1) at which the separation of the end plate (1) relative to its homologue (Ibis) is the greatest.

7. Roller (2) end plate (1) according to one of Claims 1 to 6, **characterized in that** at least one recess (5, 8, 11) is realized in the form of a circular groove disposed along a peripheral line (6, 9, 12) of constant radius.

8. Roller (2) end plate (1) according to one of Claims 1 to 6, **characterized in that** at least one recess (5, 8, 11) is realized by at least one discrete absence of material localized on a peripheral line (6, 9, 12) of constant radius.

9. Roller (2) end plate (1) according to one of the preceding claims, **characterized in that**, the surface of the end plate (1) comprising a coating and/or a treatment improving the hardness and/or the resistance to wear, at least one recess (5, 8, 11) is realized so as to have a depth less than the thickness of the surface treatment that covers the monitored portion of the surface of the end plate (1).
